(19)

Europäisches
Patentamt
European
Patent Office
Office européen
des brevets

(11) **EP 2 074 887 A1**

(12) **EUROPEAN PATENT APPLICATION**

(43) Date of publication:
**01.07.2009 Bulletin 2009/27**

(51) Int Cl.:
***A23C 19/08*** *(2006.01)* ***A23C 20/00*** *(2006.01)*

(21) Application number: **08168418.5**

(22) Date of filing: **05.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **28.12.2007 US 966347**

(71) Applicant: **Kraft Foods Global Brands LLC
Northfield, Illinois 60093 (US)**

(72) Inventors:
  • **Ma, Yinqing
  Arlington Heights, IL 60004 (US)**

  • **Lindstrom, Ted Riley
  Punta Gorda, FL 33950 (US)**
  • **Rodriguez, Ana Patricia
  Evanston, IL 60202 (US)**
  • **Mei, Fu-i
  Wheeling, IL 60090 (US)**

(74) Representative: **Smaggasgale, Gillian Helen
W.P. Thompson & Co,
55 Drury Lane
London WC2B 5SQ (GB)**

(54) **Increasing the firmness of process cheese by utilizing ingredient synergism**

(57)    Process cheeses and methods for making process cheeses are provided herein. The process cheeses are provided with increased firmness despite high levels of whey protein contained therein by combining at least one high functionality thermally modified whey protein compound with specific casein or other protein sources to achieve a synergistic effect that increases the yield stress of the cheese compound.

EP 2 074 887 A1

**Description**

**FIELD OF THE INVENTION**

The invention relates to process cheese and its production. More specifically, the invention relates to process cheeses with increased whey protein concentration and to methods for producing these process cheeses.

The invention further relates to a method of modifying whey, and in particular, a method of combining thermally treated whey and selected milk proteins to create process cheese, and in particular, process cheese with good texture and a firm body despite having high levels of whey protein and high moisture content.

**BACKGROUND**

In process cheeses, dairy solids, and particularly casein protein, generally account for the desired cheese-like texture and firmness as well as provide nutritional benefits to the cheese. Casein protein, however, is one of the more expensive ingredients in process cheese. Accordingly, reducing the amount of casein protein and increasing the amount of moisture in a process cheese would provide economical benefits by reducing manufacturing costs. However, maintaining the desired cheese-like texture, taste, and mouthfeel as well as maintaining the nutritional benefits in a process cheese with lower levels of casein protein and higher levels of moisture is difficult to achieve.

In conventional cheese making, only a few percent of whey proteins from milk used to make the cheese are ultimately incorporated into the finished cheese, and the majority of whey (including whey protein) is discarded as a liquid by-product of the curdling process. Whey often has been considered of little value in its aqueous or dried form. Nevertheless, since whey proteins comprise about 14 to 24 weight percent of whole and/or skim milk's proteins and have a nutritional value at least comparable to that of casein, the loss of whey proteins in conventional cheese making processes represents a costly inefficiency. Increased incorporation of whey proteins as a protein source in process cheese, or incorporation into other food products, is beneficial for reducing costs and maintaining nutritional benefits so long as the process cheese can be formulated with a suitable texture and firmness. However, replacing all or significant amounts of casein protein in process cheese with whey protein, especially at high moisture levels (*i.e.,* above about 45 percent), normally has an adverse effect on the mouthfeel and other textural qualities of the processed cheese.

Attempts have been made to limit waste by finding valuable uses for whey. For instance, some have altered whey in order to render the whey more suitable as a food additive. For example, whey has been altered for use in liquid, semi-liquid, or soft food products, such as in salad dressings, mayonnaise, ice cream, custard, and artificial yogurt. Altered whey has also been used as a nutritional supplement in meat and meat products, flour based products, beverages, and desserts. In addition, whey has also been altered for use in cheese. However, some altered whey does not provide desired functional properties in cheeses with high moisture (i.e., greater than about 45 percent). Furthermore, process cheese formulas with casein/whey protein ratios below about 3:1 give unacceptable textural characteristics (commonly expressed as "soft body"). Therefore, there remains a need for process cheeses with increased whey that retain acceptable firmness, even with moisture levels above about 45 percent and/or a casein to whey ratio of less than about 3:1.

Yee et al. (U.S. Pat. No. 5,750,177) describe natural cheeses with increased levels of whey protein that have casein: whey ratios of 16:1 to 4:1 made from ultrafiltered cheese (cheese made from ultrafiltration of milk followed by a fermentation or acidification step). The cheeses of Yee et al. require labor, time, and equipment-intensive ultrafiltration, and have a whey protein:casein ratio that is no greater than that of the starting milk.

Czulak et al. (U.S. Pat. No. 4,518,616) describe methods for increasing the amount of whey protein incorporated into a natural cheese by ultrafiltering whey to form a whey protein concentrate, mixing the whey protein concentrate with milk to form an enriched milk, and then ultrafiltering the enriched milk, either before or after curding of the milk using lactic starter cultures, rennet, or combinations thereof.

GB Patent No. 2,063,273 and US Patent No. 6,139,900 disclose methods to alter whey protein in order to change the protein structure such that the whey is more useful as a food ingredient; however, such methods only disclose the altered whey as being suitable to thicken flowable food items such as dressings, yogurt, and infant formulas. Moreover, the resultant whey is generally unsuitable for direct use in process cheeses either because it does not produce the desired firmness or because the whey would most likely require additional processing prior to use in the cheese.

GB Patent No. 2,063,273 discloses a method of preparing soluble denatured whey protein compositions by raising the pH of a 2 to 4 percent whey protein solution to 6.5 to 8 and then heating the solution to 75°C to 90°C for 1 to 30 minutes. The processed whey is then used in salad dressing or artificial yogurt. This reference provides specific examples of altering whey with a whey protein concentration between 0.7 and 3 percent.

U.S. 6,139,900 discloses methods for preparing whey protein dispersions with viscosities comparable to that of carbohydrate hydrocolloids. A first aqueous solution of whey proteins having a pH of at least about 8.0 is heated and then cooled, diluted to provide a diluted aqueous whey protein solution, adjusted to a pH of less than 8.0, and then heated in a second heating step to obtain a whey protein product. The whey protein product has a viscosity of from about 200 to about 550 mPa, and may be dried to form a powder.

Other methods have been used to alter whey for use in a food product. These methods, however, generally form whey agglomerates which are unsuitable for obtaining the desired functionality (i.e., firmness and smooth texture) in a high moisture cheese. For example, US Patent No. 4,734,287 discloses a method of altering whey that forms whey agglomerates suitable for making mayonnaise-like spreads and the like that have particle sizes between 0.1 to 2 microns (with less than 2 percent of the agglomerates exceeding 3 microns), and that mimic the mouth feel of oil/water emulsions.

US Patent No. 5,494,696 discloses a method of altering high concentrations of whey protein (i.e., 65 to 95 percent whey by weight relative to the dry matter) to form agglomerates having a mean particle size in the range from 30 to 60 $\mu$m for use in cold-prepared emulsions such as mayonnaise, salad dressings, sausages, and ice cream. The whey is then diluted, preheated to 50°C to 70°C, and then heated during homogenization between 70°C and 98°C for 80 to 600 seconds. The complex process disclosed in the '696 patent requires a highly concentrated whey protein and multiple heating steps, which adds additional time and expense to the manufacturing process.

There have been some successful methods of producing process cheese with high amounts of whey protein. For instance, U.S. Patent No. 6,669,978 discloses methods of making process cheese having a casein to whey protein ratio of from about 50:50 to about 75:25 by incorporating a modified dairy protein source such as high viscosity whey protein, emulsified high fat whey protein powder, low calcium whey protein, or high solubility milk protein. "High solubility milk protein," as used in that patent, refers to milk protein in which proteins are more completely solubilized than in natural milk (and preferably greater than about 90 percent soluble), as measured, for instance, by the methods disclosed in Morr et al., J. Food Sci., 50, 1715-18 (1985). The patent discloses producing process cheese by combining modified dairy proteins, whey protein, milkfat, emulsifier, and optionally one or more other ingredients such as, but not limited to, whole whey, cheese, and lactic acid. The ingredients are combined to form a dairy emulsion, cooked to form a cooked emulsion, and then cooled to form a process cheese. The dairy emulsion and/or cooked emulsion may be homogenized to increase the firmness of the process cheese.

In addition, published U.S. Patent Application 2007/0134396 discloses methods of making firmer processed cheese having about 45 to about 50 percent moisture and a casein to whey protein ratio of at least about 60:40 by incorporating thermally treated whey protein. The process begins with a whey protein concentrate (which may have an initial whey protein content of about 30 to about 55 percent), which is then diluted to form a solution having about 7.5 percent whey protein content or less. The pH of the solution is adjusted, if necessary, to between about 6 and about 7.6, and preferably to about 6.8 to about 7.6. The solution is thermally treated using either direct or indirect heating techniques at a time and temperature sufficient to form whey protein agglomerates. Preferably, the solution is heated using direct steam injection at about 180°F or greater for at least about 3 minutes, which forms whey protein aggregates generally about 20 to about 200 microns. The thermally treated whey protein is then incorporated into process cheese, preferably process cheese having high moisture, high whey protein, and lower casein levels relative to traditional process cheeses. The thermally treated whey protein need only account for a portion of the total whey protein in the process cheese. For instance, a preferred process cheese composition is disclosed as having about 5.7 to about 6.3 percent total whey protein (preferably about 3 to about 4.5 percent thermally modified whey protein), about 8.5 to about 9.5 percent casein protein, about 9.5 to about 10.5 percent lactose, about 17.1 to about 18.9 percent milk fat, about 2.5 percent emulsifying salt, about 1.8 percent salt, and about 45 to about 50 percent water. Process cheeses incorporating the thermally modified whey protein have a firmness of about 1400 Pa or more.

Despite the above advances, there remains a need for methods of further increasing the firmness of whey protein-containing process cheese and mimicing the firmness and other organoleptic properties generally associated with conventional cheese products and process cheeses.

## SUMMARY

The present invention provides cheeses and processes for making cheeses with increased levels of whey protein (i.e., casein:whey protein ratio less than about 3:1) with controlled. Generally, the process cheeses of this invention have a yield stress of about 3000 to about 8000 Pa.

In order to achieve these levels of firmness in cheeses having high moisture and high whey protein content, at least one high functionality thermally modified whey protein compound is combined with at least one high solubility milk protein, high solubility milk protein concentrate ("high solubility MPC), high solubility milk protein isolate ("high solubility MPI"), or rennet casein (casein produced by treating milk with rennet enzyme). Essentially, an unexpected and surprisingly effective synergistic effect is achieved by combining an inventive "high functionality" modified whey protein as disclosed in U.S. Patent Application 2007/0134396 with either rennet casein or a "high solubility" milk protein as described in U.S. Patent No. 6,669,978, as described further herein.

"High functionality modified whey protein" refers to inventive thermally modified whey proteins as described in Application 20070134396, which are formed from a whey protein solution having about 7.5 percent (by weight) whey protein content or less and a pH of about 6 to about 7.6 that is thermally treated at a time and temperature sufficient to form loose whey protein agglomerates (e.g., about 180°F or greater for at least about 3 minutes) as further described below. By contrast, low functionality modified whey protein may be formed by applying thermal treatment to solutions having greater than about 7.5 percent whey protein and/or thermally treating whey proteins for times and temperatures insufficient to form appropriate whey protein agglomerates.

High solubility milk proteins for use in synergistic combinations as described include Nutrilac CH7813, TMP 1220, TMP 1100, TMP 1350 and other milk protein powders and milk proteins in which proteins are more completely solubilized than in natural milk (and preferably greater than about 60 percent soluble, more preferably greater than about 90 percent soluble). Surprisingly, it has been found that rennet casein may also be combined with high functionality whey protein to form a synergistic combination.

Although the thermally modified whey proteins, high solubility milk proteins, or rennet casein may by themselves increase the firmness of a high whey protein process cheese to varying degrees, the firmness of process cheese compositions may be enhanced to unexpectedly high levels through synergistic effects of the combination of high functionality modified whey protein and either high solubility milk protein or rennet casein. Such a firm texture is not predictable based on the use of the modified whey proteins, high solubility milk proteins, and/or rennet casein in isolation, or based on combinations with other firmness-increasing protein compounds. Process cheeses utilizing the same thermally modified whey protein or rennet casein have a much higher firmness level when also containing high solubility milk protein than when containing other milk proteins capable of increasing firmness on their own. By maintaining the desired cheese firmness and texture with less casein and more moisture, manufacturing cost savings may be realized.

Preferably, the whey is modified through a thermal treatment at a predetermined whey protein concentration and at a predetermined pH for a time and temperature sufficient to form loosely aggregated whey protein. Either high solubility milk protein or rennet casein is then combined with the thermally modified whey protein along with milkfat, an emulsifier, and optionally one or more other ingredients such as, but not limited to, whey protein, whole whey, cheese, and lactic acid, to form a dairy emulsion. The dairy emulsion is then cooked to form a cooked emulsion, and cooled to form a process cheese. The process cheeses prepared by this method have a ratio of casein to whey protein of from about 60:40 to about 80:20. In preferred embodiments, the ingredients in the dairy emulsion provide a ratio of casein to whey protein of from about 60:40 to about 65:35 in the process cheese.

## BRIEF DESCRIPTION OF FIGURES

Fig. 1 shows a process of modifying whey protein for use in the invention.

Fig. 2 shows one embodiment of modifying whey protein for use in the invention.

Fig. 3 shows another embodiment of modifying whey protein for use in the invention, incorporating several optional steps.

Fig. 4 shows yield stress of various samples of process cheeses made by combining specified milk proteins with specified thermally modified whey proteins.

Fig. 5 demonstrates the synergistic effect of combining high solubility milk protein and high functionality thermally modified whey protein as in Sample A of Example 1.

Fig. 6 demonstrates the synergistic effect of combining high solubility milk protein and high functionality thermally modified whey protein as in Sample J of Example 2.

Fig. 7 demonstrates the synergistic effect of combining rennet casein and high functionality thermally modified whey protein as in Sample M of Example 3 and Sample P of Example 4.

Fig. 8 is a micrograph of a high functionality modified whey protein concentrate liquid.

Fig. 9 is a micrograph of a low functionality modified whey protein concentrate liquid.

Fig. 10 is a micrograph of a high functionality modified whey protein concentrate powder for use in the invention.

Fig. 11 is a micrograph of a low functionality modified whey protein concentrate liquid providing a comparison for the agglomerates of the high functionality WPC.

Fig. 12 is a micrograph of a low functionality modified whey protein concentrate powder.

Fig. 13 is a micrograph of another high functionality modified whey protein concentrate powder for use in the invention.

Fig. 14 is a micrograph of another low functionality modified whey protein concentrate powder.

Fig. 15 is a micrograph of another example of a high functionality modified whey protein concentrate powder for use in the invention.

Fig. 16 is a micrograph of another example of a high functionality modified whey protein concentrate powder for use in the invention.

Fig. 17 is a micrograph of another example of a low functionality modified whey protein concentrate powder.

Fig. 18 is a micrograph of another example of a high functionality modified whey protein concentrate powder for use in the invention.

**DETAILED DESCRIPTION**

Provided herein are whey-protein-containing process cheese products having increased firmness, as measured by yield stress. For purposes herein, "yield stress" of a material is defined as the sheer stress that must be overcome to initiate significant fracture or flow of the material, and is related to the strength of a network of molecules. At any point below a given cheese product's yield stress, the cheese product will behave elastically, whereas stresses higher than the yield stress will cause irrecoverable strain and result in facture of the cheese product. Yield stress may be measured using the "vane method" (Breidinger, S.L. and Steffe, J.F., J. Food Sci., 66:453 456 (2001), hereby incorporated by reference herein), which determines the maximum amount of torque required for a predetermined number of vane blades (relatively thin, flat, rigid blades mounted radially about an axis) to fracture a sample. The vanes are lowered into a sample and rotated until fracture is reached. Yield stress is then calculated according to the following formula:

$$\text{Yield Stress (Pa)} = [2 \times M_f \times (H/D + 1/6)^{-1}]/(\pi D^3)$$

where D is the vane blade diameter, H is vane blade height, and $M_f$ is the maximum torque achieved at sample fracture.

In one aspect, the invention includes the incorporation of high functionality thermally modified whey proteins as disclosed in U.S. Patent Application Serial 2007/0134396, which is incorporated by reference as if fully set forth herein, with either rennet casein, high solubility milk proteins such as those described in U.S. Patent No. 6,669,978, (incorporated by reference herein) or a combination thereof to form a high whey protein process cheese with significantly higher yield stress than other process cheeses having similar levels of whey protein. This combination of modified whey protein and casein/milk proteins takes advantage of synergy between the two protein sources to provide an unexpectedly high increase in firmness as compared to conventional high whey protein process cheeses, and even as compared to process cheeses incorporating firmness-enhancing thermally treated whey proteins or firmness-enhancing high solubility milk proteins alone.

As used herein, "high solubility milk protein" means milk proteins, milk protein concentrates, milk protein isolates, and the like in which proteins are more completely solubilized than in natural milk. Solubility can be measured as described in Morr et al., J. Food Sci., 50, 1715-18 (1985), which is hereby incorporated by reference as if fully set forth herein. Generally for use in the present invention, the solubility for the high solubility milk protein material is greater than 60%, and preferably, the milk protein in a high solubility milk protein material will be greater than about 90 percent soluble as measured by the Morr et al. method. Such proteins are known in the art and include, for example Nutrilac CH7813 (Aria Food Ingredients, Videbaek, Denmark), TMP 1220, TMP 1100, and TMP 1350 (Fonterra, NZ).

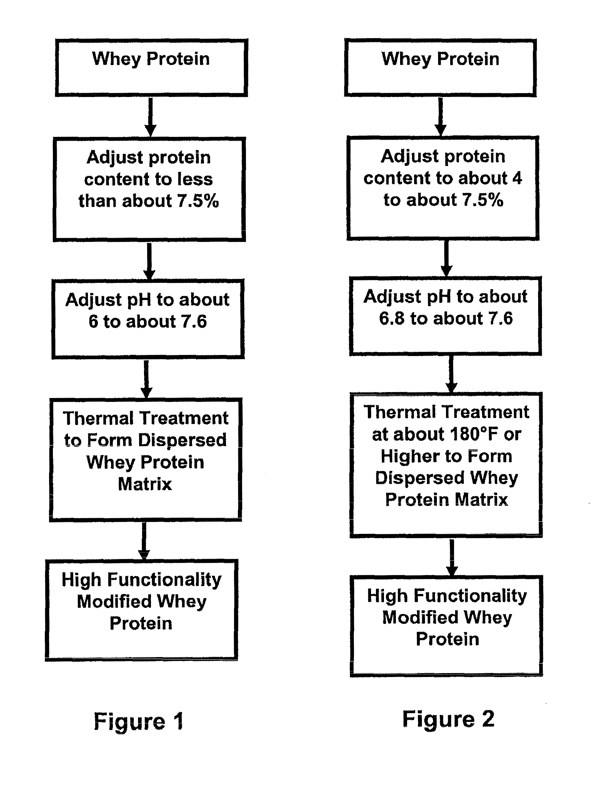

In order to produce modified whey protein for use in the invention, whey is thermally treated at predetermined protein levels and within a predetermined pH range for a time and temperature sufficient to cause adequate protein denaturation and the formation of whey protein aggregates. A basic process for producing modified whey protein for use in the invention is illustrated in Fig. 1. The process usually involves adjusting the amount of whey protein in an aqueous mixture to about 7.5 percent or less. The solution pH is then adjusted to about 6 to about 7.6. Thereafter, the solution is subjected to a thermal treatment for a time and temperature suitable to cause protein denaturation and the formation of whey aggregates. The modified whey is then preferably incorporated into the processed cheese.

In a preferred method, as illustrated in Fig. 2, the amount of whey protein in the aqueous mixture is first adjusted to about 4 to about 7.5 percent. The mixture is then adjusted to a pH of about 6.8 to about 7.6, and thereafter subjected to a thermal treatment at about 180°F or higher for a time sufficient (i.e., about 3 minutes or longer) to cause protein denaturation and subsequent formation of whey aggregates. The modified whey is then incorporated into the processed cheese.

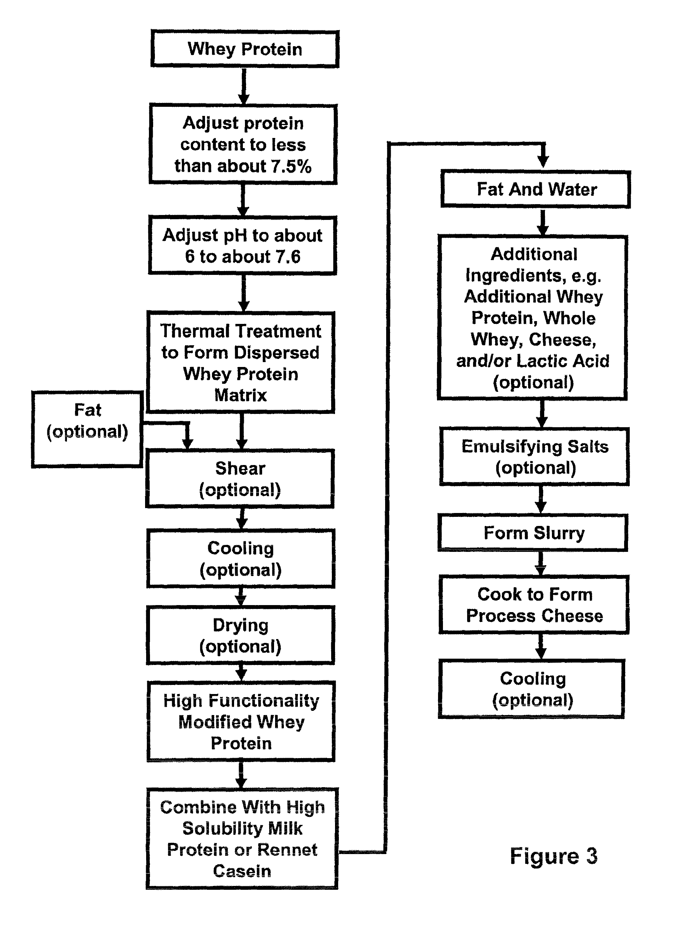

After thermal treatment, the modified whey may also be subjected to optional processing prior to its incorporation into a processed cheese. For instance, as illustrated in Fig. 3, the method may also add additional ingredients to the modified whey, such as one or more fat compounds, and/or may include additional processing steps, such as shearing, cooling, or drying. The optional steps may be used as desired to provide for a particular form of the modified whey (i.e., solution or powder), a particular particle size, or particular characteristics to the food.

In one aspect, the raw starting material for the thermally modified whey protein is an aqueous solution of whey protein concentrate (WPC), such as a liquid WPC or a reconstituted WPC powder. It is preferred that the initial WPC has about 30 to about 55 percent whey protein on a dry basis; however, WPC with other protein levels may also be used. In one form, the whey protein content of the aqueous WPC solution is diluted to about 7.5 percent (by weight) whey protein (on a wet basis) or less in the solution. For instance, the whey protein content may be diluted by blending an amount of water into the solution until the desired whey protein content is achieved. Preferably, the whey protein content of the WPC solution is diluted to about 4 to about 7.5 percent whey protein. Prior to reducing the whey protein concentration to below about 7.5, the amount of lactose in the solution may optionally be reduced by first concentrating the solution to about 32 percent protein or higher before diluting to about 7.5 percent protein. This optional concentration step is used to maximize the protein-to-mass ratio of the WPC, thus making transportation more cost-effective. Prior to the thermal treatment, the pH of the protein-diluted aqueous WPC solution is also preferably adjusted to about 6 to about 7.6, and most preferably, about 6.8 to about 7.6. The pH may be adjusted, for example, by adding appropriate amounts of 5N NaOH or other high pH materials, or by other methods of adjusting pH. Once the pH is adjusted between about 6 to about 7.6, the solution is then thermally treated using either direct or indirect heating techniques in either a continuous or batch system, preferably under constant agitation, for a time and temperature sufficient to form the whey protein agglomerates. In a continuous system, the whey solution is maintained under a constant state of agitation by flowing through a holding tube during heat treatment or optionally flowing through a liquefier or pump to impart a shear force on the solution. In a batch system, the whey solution is maintained under a constant state of agitation during thermal treatment via a mixing blade, ribbon, or other suitable mixing device. Preferably, the solution is heated using direct steam injection to about 180°F or higher for about 3 minutes or longer. Most preferably, the solution is heated using steam injection to about 180°F to about 190°F for about 3 minutes to about 30 minutes.

The solution may optionally be heated slightly prior to the pH adjustment, especially if previously stored under refrigerated conditions. The modified solution may optionally be pumped or mixed to disperse any large whey protein curds, sheared in a high shear pump, cooled to less than about 80°F, and spray dried. The heating process may add water (as in direct steam injection), altering the final solid content and protein content of the modified WPC.

Once the thermally modified whey protein is prepared, it is mixed with a milk protein source comprising high solubility milk proteins or rennet casein (or mixtures thereof), and further mixed with fat and water to form a slurry. Emulsifying salts (such as sodium citrate, sodium phosphate, and the like, or mixtures thereof) may optionally be added to aid the mixing process upon heating. Other compounds, including but not limited to whey protein, whole whey, cheese, and lactic acid may also optionally be added. The ingredients are then cooked and cooled to form a process cheese.

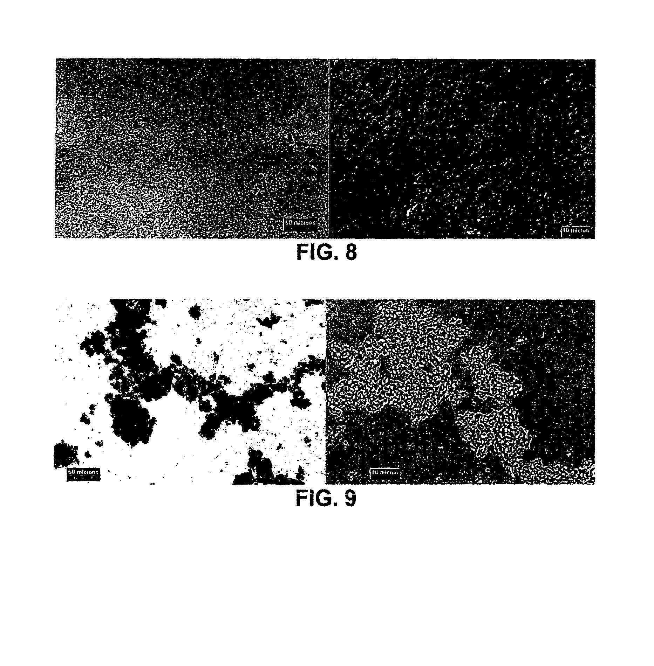

The functional difference between high functionality thermally modified protein and low functionality thermally modified protein appears to be explained at least in part by the types of protein aggregates formed as the protein concentration varies. As discussed more fully below in Example 5, high functionality thermally modified proteins appear to form looser aggregates. For purposes of comparison, a WPC was used to form both high and low functionality modified proteins using the same heating conditions, but varying the initial concentration of the subject proteins. FIG. 8 is a micrograph of a liquid high functionality modified WPC 50 formed by heating a slurry of about 7.4% protein at about 180°F. The protein strands of this modified WPC are relatively evenly dispersed, forming a relatively homogenous protein suspension. In contrast, FIG. 9 shows a micrograph of a relatively low functionality modified WPC 50 formed by heating a slurry of about 19.5% protein at about 180°F. This low functionality modified WPC is highly aggregated compared to the high functionality protein and tends to form discrete, dense particles (the dark areas in the micrograph). Due to the density of the aggregates, the low functionality proteins are not as well dispersed throughout the solution. Without wishing to be bound by theory, it is believed that the less densely aggregated strands of high functionality modified whey protein (FIG. 8) afford more interaction with water, increasing the water-holding capacity of the protein material and forming a gel-like colloidal solution of fine protein strands, whereas the low functionality modified protein (FIG. 9) forms a particulate solution less capable of holding water, which are less cohesive as a result.

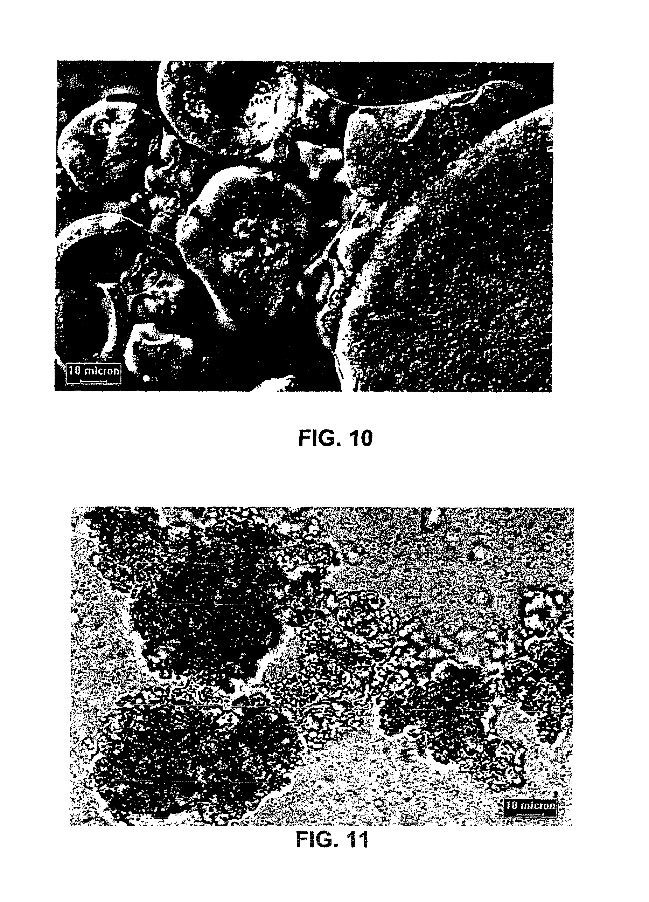

FIGS. 10 and 11 show the high functionality (FIG. 10) and low functionality (FIG. 11) modified whey proteins from FIGS. 8-9 in a powder form dispersed in a small amount of water. As can be seen, the high functionality protein once again is more loosely aggregated than the lower functionality protein.

The following examples are intended to illustrate the invention and not to limit it. Unless specifically stated otherwise, all percentages and ratios are by weight. All publications (non-patent and patent) as well as issued patents referenced herein are hereby fully incorporated by reference.

## EXAMPLE 1

Various samples of process cheese were prepared using different combinations of whey protein concentrate (WPC) and milk protein concentrate (MPC). An inventive sample incorporating high functionality modified WPC50 and high solubility milk protein concentrate was compared to samples with unmodified whey protein concentrate, low-functionality modified whey protein concentrate, and/or lower solubility milk protein concentrate. An unexpected increase in yield stress was demonstrated by the inventive combination that cannot be accounted for by the individual contributions of the milk proteins and whey proteins utilized.

To demonstrate the synergistic effect of the combination of modified WPC and high solubility milk proteins, several comparative samples were prepared having commodity ingredients or one, but not both, of the aspects of the synergistic combination.

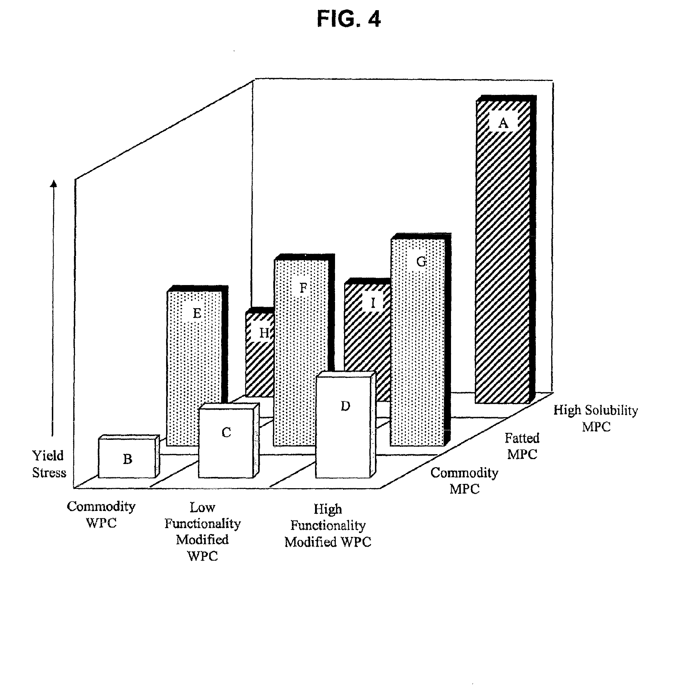

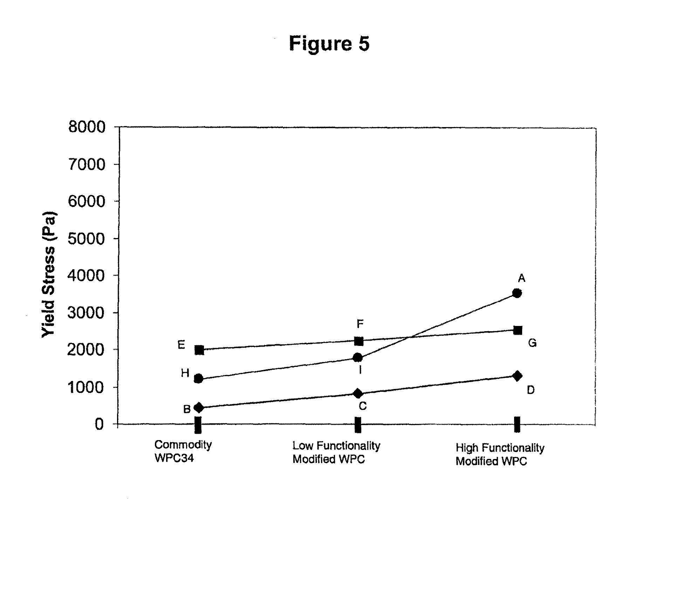

As will be seen from the results below, and as illustrated in Figs. 4 and 5, forming a processed cheese that combines a high solubility milk protein and high functionality thermally modified whey protein significantly increases the firmness of the cheese in comparison to processed cheeses with similar levels of whey protein but incorporating at most one of the thermally modified whey protein or the high solubility milk protein. In addition, incorporating commodity or low solubility milk proteins, even some that are known by themselves to increase the firmness of high whey protein cheeses, does not lead to the same synergistic effect exhibited by the combination of high solubility milk proteins and thermally modified whey proteins.

As illustrated in Fig. 4, the various combinations of whey proteins and milk proteins in Samples A-i (described below) result in varying levels of firmness. However, the combination of high solubility milk protein concentrate and high functionality thermally modified whey protein concentrate (Inventive Sample A) is significantly firmer than other combinations comprised of commodity or low functionality WPC and/or commodity MPC. The success of Inventive Sample A is underscored by the fact that the samples incorporating a fatted milk protein concentrate (Samples E, F, and G) have generally higher levels of firmness than samples incorporating high solubility milk protein and equivalent whey proteins, except that the specific combination of high functionality thermally modified WPC and high solubility MPC in Inventive Sample A gives rise to a dramatic increase in firmness that shows significant improvement over a sample comprised of the same thermally modified WPC combined with the fatted milk protein concentrate.

This synergistic effect is shown again in Fig. 5. The yield stress values are plotted on Fig. 5 as a function of the type of whey protein concentrate incorporated. The samples connected by lines incorporate the same milk protein. Samples B-D utilize a commodity MPC, Samples E-G utilize a fatted MPC, and Samples H, I, and A utilize a high solubility MPC. The WPC used in each sample is indicated on the x-axis. As shown in Fig. 5, changes in WPC for a cheese incorporating a specified MPC establish a generally linear trend, with the yield stress increasing when substituting low functionality modified WPC for commodity WPC, and increasing again in a roughly linear amount when substituting high functionality modified WPC for low functionality modified WPC. However, the samples incorporating high solubility milk proteins do not follow this trend, since the combination of high solubility milk protein and high functionality whey protein concentrate gives rise to an unexpectedly high level of firmness (Sample A), providing a far firmer cheese than would be expected based on roughly linear trends of cheeses made with other MPCs. This sharp increase from Sample I ta Sample A demonstrates the synergistic effect between the relatively high functionality WPC and highly soluble MPC, and demonstrates that more than a simple addition of functional ingredient improvements takes place.

Further details regarding each sample and comparisons thereof are provided below. Ingredients were added in amounts so that each finished sample would have roughly the following composition, which does not account for minor amounts of certain minerals and other ingredients:

Table 1

| Ingredient | Amount, wt. % |
| --- | --- |
| Whey protein (dry basis) | 6 |
| Casein protein | 9 |
| Lactose | 10 |
| Milk fat | 18 |
| Emulsifying Salt | 2.5 |
| Salt | 1.8 |
| Total Water | 50 |

**Inventive Sample A.** In this sample, a high solubility MPC was combined with a high functionality modified WPC50 to form an unexpectedly firm process cheese utilizing synergy of the two ingredients.

The high functionality modified whey protein concentrate was created by diluting a liquid WPC50 from 39.5 percent solids to 14.7 percent solids (i.e., about 7.4 percent protein on a wet basis). The diluted WPC solution was heated to 100°F and the pH was adjusted from 6.3 to 7.6 using 5N NaOH. The liquid WPC at pH 7.6 was then heated to 180°F by steam injection and held in a holding tube for 6 min. Afterwards, the solution was pumped into a Breddo mixer (Breddo Likwifier, Kansas City, MO) to disperse any large whey protein curds, sheared in a Silverson high shear pump (Silverson Machines, Inc., East Longmeadow, MA), and spray dried. Due to dilution from direct steam injection, the liquid modified WPC had a final solid content of 13.0 percent and a protein content of 6.6 percent. The modified WPC was then dried to form a powder for later use.

Modified WPC50 (26.4 grams) was mixed with 38.5 grams Nutrilac CH7813 (Arla, Denmark; a high solubility milk (casein) protein with a solubility of greater than about 80%), 26.0 grams of dried sweet whey, and 5.4 grams of sodium chloride in 143.7 grams of warm water. Next, 52.6 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in a Rapid-Visco-Analyzer (RVA) (Newport Scientific) bench scale sample canister according to the procedure of Kapoor and Metzger (Kapoor, R. and Metzger, L.E., J. Dairy Sci., 88:3382-3391 (2005)). The cook sequence in the RVA was conducted at a constant 1500 rpm mixing speed. The sample was first equilibrated at 104°F and then heated to 140°F in about 90 seconds. The sample was then held at 140°F for an additional 60 seconds, and then further heated to 181°F in about 90 seconds. Thereafter, the sample was held at 181°F for an additional 180 seconds. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The moisture content of the Sample A process cheese was 49.3% and the pH was 5.80. The yield stress, tested using the vane method, was 3539 Pa. The vane blades used to determine yield stress had a diameter of about 0.6 cm, a height of about 1.0 cm, and were rotated at a rate of about 0.5 rpm.

**Comparative Sample B.** A comparative process cheese product was made of normal, commodity protein ingredients to demonstrate the baseline for process cheeses with about 50 percent moisture and a casein to whey protein ratio of about 3:2.

A commercially available WPC34 (37.4 grams; Leprino, Denver, CO), a readily available WPC, were mixed with 48.2 grams milk protein concentrate (NatraPro MPC70, Murray Goulburn Co-operative Co., Ltd., Brunswick, Australia; less than about 30% solubility), 4.5 grams of dried sweet whey, and 5.5 grams of sodium chloride in 144.6 grams of warm water. The dried sweet whey was added to the mixture as a source of lactose. Melted anhydrous milk fat (52.7 grams) was then added to the solution to form a slurry. The pH of the slurry was adjusted to about 5.1 through the addition of lactic acid (88% concentration). After the pH adjustment, 7.5 grams of disodium phosphate were added and the slurry was cooked in the RVA as in Sample A.

The cook sequence in the RVA was conducted at a constant 1500 rpm mixing speed. The sample was first equilibrated at 104°F and then heated to 140°F in about 90 seconds. The sample was then held at 140°F for an additional 60 seconds, and then further heated to 181°F in about 90 seconds. Thereafter, the sample was held at 181°F for an additional 180 seconds. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The moisture content of Sample B was 47.3%, and the pH was 5.83. Yield stress was measured to be 450 Pa using the vane method, which was taken to be the normal yield stress for a process cheese having about 50% moisture and made from commodity protein ingredients. This serves as a baseline for evaluating Sample A as well as other comparative samples.

**Comparative Sample C.** A comparative sample was prepared by combining a commodity MPC (less than about 30% solubility) and a relatively low functionality thermally modified WPC50.

The relatively low functionality thermally modified WPC50 was prepared by heating a liquid WPC50 having 39.5 percent solids (i.e., about 19.5 percent protein on a wet basis) to 100°F where the pH was adjusted from 6.3 to 7.6 using 5N NaOH. The liquid WPC at pH 7.6 was then heated to 180°F by steam injection and held in a holding tube for 6 min. Afterwards, the WPC was pumped into a Breddo Likwifier to disperse any large whey protein curds, sheared in a Silverson high shear pump, and spray dried. Due to dilution from direct steam injection, the liquid modified WPC had a final solid content of 35.9 percent and a protein content of 17.76 percent (on a wet basis). Since the total protein content was adjusted prior to thermal treatment to about 19.5 percent (on a wet basis), rather than to below about 7.5 percent, the resulting modified whey protein was considered to be of relatively low functionality as compared to the modified liquid whey protein of Sample A.

22.4 grams of the relatively low functionality modified WPC50 powder were mixed with 48.2 grams MPC70 (Murray Goulburn Co-operative Co., Ltd.), 19.6 grams of dried sweet whey, and 5.5 grams of sodium chloride in 144.4 grams of warm water. Next, 52.5 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in the RVA as described in Example 1. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A. The moisture content of sample C was 49.7% and the pH was 5.76.

The yield stress of this process cheese was 810 Pa, which is firmer than Sample B, but much softer than inventive Sample A.

**Comparative Sample D.** A comparative sample was created by combining a commodity MPC (less than about 30% solubility) and a relatively high functionality modified WPC50.

A modified WPC50 was created using the same process described above for Sample A. High functionality modified WPC50 (21.9 grams) was mixed with 48.2 grams MPC70 (Murray Goulburn Co-operative Co., Ltd.), 20.2 grams of dried sweet whey, and 5.5 grams of sodium chloride in 144.1 grams of warm water. Next, 52.7 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added, and the slurry was then cooked in the RVA as in Sample A. After heating, about 25 grams of the hot process cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample D process cheese was 1314 Pa, which, while an improvement over Samples B and C, is still far softer than inventive Sample A. The moisture content of Sample C was 49.8% and the pH was 5.76.

**Comparative Sample E.** A comparative sample was prepared using a fatted MPC (having a solubility comparable to commodity MPC) as the casein source and a commodity WPC34 as the primary whey protein source. WPC34 powder (38.0 grams; Leprino, Denver, CO) were mixed with 77.1 grams Alapro 4424 (Fonterra, NZ), 2.0 grams of WPC80 (Leprino, Denver, CO, used to balance the final formula), and 5.6 grams of sodium chloride in 143.3 grams of warm water. Next, 33.6 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate was added and the slurry was cooked in the RVA as in Sample A. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample E process cheese was 1990 Pa. The fatted MPC helps to create a firmer final product than a commodity MPC combined with the same commodity WPC, but not as firm as Inventive Sample A, which incorporates a high solubility MPC rather than the fatted MPC. The moisture content of Sample E was 49.7% and the pH was 5.90.

**Comparative Sample F.** A comparative sample was prepared using a fatted MPC (with a solubility comparable to commodity MPC) as the casein source and a relatively low functionality modified WPC50 powder as the whey protein source.

A liquid WPC was created as in Comparative Sample C by heating WPC50 having 39.5 percent solids (i.e., about 19.5 percent protein on a wet basis) to 100°F, where the pH of the WPC was adjusted from 6.3 to 7.6 using 5N NaOH. The liquid WPC at pH 7.6 was then heated to 180°F by steam injection and held in a holding tube for 6 min. Afterwards, the WPC was pumped into a Breddo Likwifier to disperse any large whey protein curds, sheared in a Silverson high shear pump, and spray dried. Due to dilution from direct steam injection, the liquid modified WPC had a final solid content of 35.9% and a protein content of 17.76% (on a wet basis).

Modified WPC50 (22.1 grams) was mixed with 77.1 grams Alapro4424 (Fonterra, NZ), 10.9 grams of dried sweet whey, and 5.6 grams of sodium chloride in 143.1 grams of warm water. Next, 33.7 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in the RVA as in Sample A. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample F process cheese was 2240 Pa. The fatted MPC helps to create a firmer final product than a commodity MPC combined with the same low functionality modified WPC (as in Comparative Sample B), but not as firm as Inventive Sample A, which incorporates a high solubility MPC instead of the fatted MPC. The moisture content of Sample F cheese was 49.4% and the pH was 5.82.

**Comparative Sample G.** A comparative sample was prepared using a fatted MPC (with a solubility comparable to commodity MPC) and a relatively high functionality modified WPC50.

A modified whey protein with a solid content of 13 percent and a protein content of 6.6 percent was created by following the steps described above in Sample A. Modified WPC50 (21.6 grams) was mixed with 77.1 grams Alapro4424 (Fonterra, NZ), 11.5 grams of dried sweet whey, and 5.6 grams of sodium chloride in 142.8 grams of warm water. Next, 34.0 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate was added and the slurry was then cooked in the RVA as in Sample A. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample G process cheese was 2545 Pa. Incorporation of a higher functionality modified whey protein increased the firmness of the process cheese when compared to process cheeses made from the same MPC combined with lower functionality modified whey protein or commodity whey protein.

**Comparative Sample H.** A comparative sample was prepared by combining a high solubility MPC (greater than about 80% solubility), as in Inventive Sample A) and a commodity whey protein concentrate (WPC34). WPC34 (45.3 grams ; Leprino, Denver, CO) were mixed with 38.5 grams Nutrilac CH7813 (Arla, Denmark), 7.1 grams of dried sweet whey, and 5.3 grams of sodium chloride in 144.3 grams of warm water. Next, 52.1 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate are added and the slurry was then cooked in the RVA as in Sample A. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample H process cheese was 1206 Pa, which is a significant improvement over Sample B, which was made from the same whey protein concentrate and a commodity MPC. However, the Sample H process cheese was still less firm than Sample E, which was made from the same whey protein concentrate and a fatted MPC. The moisture content of the cheese was 49.3% and the pH was 5.85.

**Comparative Sample I.** A comparative sample was prepared by combining a high solubility MPC (greater than about 80% solubility), as in Inventive Sample A) and a relatively low functionality modified WPC50.

A relatively low functionality liquid modified whey protein having a solid content of 35.9 percent and a protein content of 17.76 percent (on a wet basis) was created by following the steps described above for Sample C. Modified WPC50 (27.0 grams) were mixed with 38.5 grams Nutrilac CH7813 (Arla, Denmark), 25.3 grams of dried sweet whey, and 5.3 grams of sodium chloride in 144.1 grams of warm water. Next, 52.3 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was cooked in the RVA as in Sample A. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Sample A.

The yield stress of the Sample process cheese was 1769 Pa. The moisture content cheese was 49.5% and the pH was 5.82.

**Comparison of Samples A-I**. Table 2 below summarizes the type of whey protein concentrate, type of milk protein concentrate, and yield stress for each of samples A-I. As can be seen, the yield stress of Sample A is significantly higher than all other samples. The yield stress of process cheeses made from these combinations of WPC and MPC can also be seen in Fig. 4.

Table 2

| Sample | Inventive | Comparative | | | | | | | |
|---|---|---|---|---|---|---|---|---|---|
| | A | B | C | D | E | F | G | H | I |
| MPC | High Solubility | Comm. | Comm. | Comm. | Fatted | Fatted | Fatted | High Solubility | High Solubility |
| WPC | High Function Modified | Comm. | Low Function Modified | High Function Modified | Comm. | Low Function Modified | High Function Modified | Comm. | Low Function Modifed |
| Yield Stress (Pa) | 3539 | 450 | 810 | 1314 | 1990 | 2240 | 2545 | 1206 | 1769 |

Comparative Samples B, C, and D all incorporate MPC70, a commodity milk protein concentrate. The yield stress of each sample increases relatively modestly as a result of modifying the whey protein used to make the process cheese. Incorporating a relatively low functionality WPC with the commodity MPC (Sample C) increased the yield stress by 360Pa when compared to process cheese made from a commodity WPC (Sample B). Making a process cheese with high functionality modified WPC (made by heating a liquid whey protein with a protein content of less than about 7.5% at a pH of about 6 to about 7.6) (Sample D) resulted in a further increase in yield stress of 504 Pa over the low functionality modified whey protein version (Sample C), and a 864 PA increase over the commodity whey protein version (Sample B).

Similarly, an increase in yield stress was shown by varying the WPC used in Comparative Samples E, F, and G, which all contain the same non-high-solubility milk protein concentrate (Alapro 4424 fatted MPC). This fatted MPC provides the process cheeses made therefrom with a higher yield stress than Samples B-D (made from commodity MPC). For instance, Sample E (including fatted MPC and commodity WPC) had a yield stress of 1990 PA, which was higher than the 450 Pa yield stress of Sample B (having a commodity MPC and commodity WPC). As with Samples B-D, varying the whey protein concentrate used to make the process cheese has a effect on yield stress. Using a relatively low functionality modified WPC with the fatted WPC increased yield stress to 2240 Pa, 250 Pa above the commodity WPC version (Sample E). Combining the relatively high functionality modified WPC with the fatted MPC (Sample G) increased yield stress 305 Pa above the low functionality modified WPC version (Sample F), and approximately 555 Pa compared to the commodity whey protein version (Sample E).

On the other hand, Comparative Samples H and I, as well as Inventive Sample A, were all manufactured using high solubility MPC (Nutrilac CH7813). Using relatively low functionality modified WPC improved yield stress by approximately 563 Pa when compared to cheese using commodity MPC. Combining the relatively high functionality modified WPC with the high solubility MPC, however, increased the yield stress by 1770 Pa over the sample using low functionality WPC (Sample I), doubling the yield stress compared to that sample, and 2333 Pa above the sample incorporating commodity WPC (Sample H).

The high solubility MPC used in Samples A, H, and I generally raised the yield stress above that of process cheeses incorporating commodity MPC (Samples B, C, and D), but in most cases not as high as those incorporating fatted MPC (Samples E, F, and G). The one notable exception to this rule is Inventive Sample A, wherein a synergistic effect was created by combining a high functionality modified WPC and a high solubility MPC. This synergistic effect unexpectedly made inventive Sample A significantly firmer than the comparative sample incorporating the same modified WPC combined with a fatted MPC, despite the fact that the contribution to firmness of the high solubility MPC alone appears to be significantly less than the contribution of fatted MPC alone (compare Samples H and I with Samples E and F, respectively).

This synergistic effect is best shown in Fig. 5. The yield stress values are plotted as a function of the type of whey protein concentrate incorporated. Samples incorporating the same milk protein concentrate are connected by lines, illustrating a trend for changes in whey protein source for each of the three milk protein source tested. It can easily be seen from Fig. 5 that changes in WPC for a cheese incorporating a specified MPC establish a generally linear trend, with the yield stress increasing when substituting low functionality modified WPC for commodity WPC, and increasing again in a roughly linear amount when substituting high functionality modified WPC for low functionality modified WPC. However, Inventive Sample A does not follow this trend. Instead, it can be seen that Inventive Sample A creates a sharp increase in yield stress, providing a far firmer cheese than would be expected based on trends of cheeses made with other MPCs. This sharp increase from Sample I to Sample A demonstrates the synergistic effect between the relatively high functionality WPC and highly soluble MPC, and demonstrates that more than a simple addition of functional ingredient improvements takes place. Even though both the MPC and WPC of sample G contribute to increased firmness, the overall firmness of the sample cheese incorporating a combination of the two is not as great as the inventive combination, even though the MPC and WPC of Samples E-G have equal or greater individual contributions.

## EXAMPLE 2

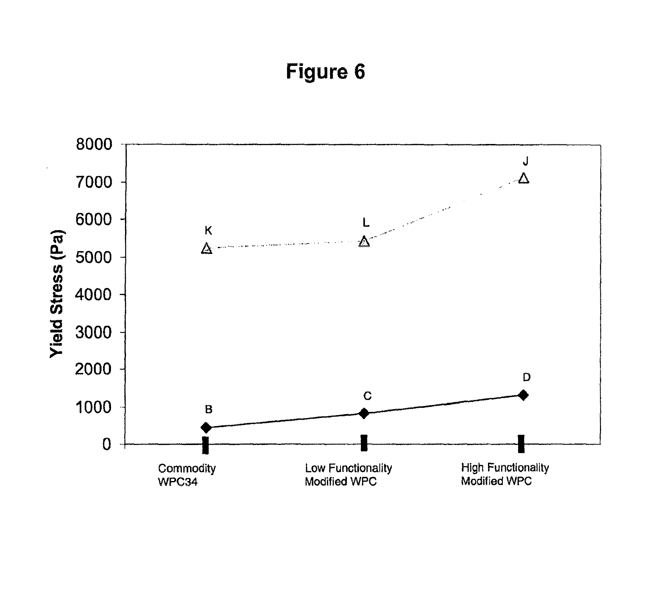

This example shows the yield stress of three samples of process cheese made from another high solubility milk protein compound, TMP 1220 (Fonterra, NZ;at least about 60% solubility). As in Example 1, an unexpectedly sharp increase in firmness is observed in the Inventive sample due to the synergistic combination of high solubility milk protein isolates and high functionality modified whey protein concentrate. Even though, due to the nature of the MPI used, the texture of each of the samples incorporating TMP 1220 is far firmer than cheeses tested in Example 1, the synergistic effect of combining a high functionality thermally modified WPC with the high solubility MPI TMP 1220 can be seen, for example as illustrated in Fig. 6, where a sharp increase in firmness is observed when a high functionality thermally modified WPC is incorporated (Inventive Sample J) as compared to cheese incorporating the same MPI but low functionality thermally modified WPC (Sample L) or commodity MPC (Sample K).

**Inventive Sample J.** This is an inventive example demonstrating the synergistic combination of a casein source comprising high solubility milk protein isolate (MPI) and a whey protein source comprising high functionality modified WPC50.

The high functionality modified whey protein concentrate was created by diluting a liquid WPC from 39.5 percent solids to 14.7 percent solids (i.e., about 7.4 percent protein on a wet basis). The diluted WPC solution was heated to 100°F and the pH was adjusted from 6.3 to 7.6 using 5N NaOH. The liquid WPC at pH 7.6 was then heated to 180°F by steam injection and held in a holding tube for 6 min. Afterwards, the solution was pumped into a Breddo Likwifier to disperse any large whey protein curds, sheared in a Silverson high shear pump, and spray dried. Due to dilution from direct steam injection, the liquid modified WPC had a final solid content of 13.0 percent and a protein content of 6.6 percent. The modified WPC was then dried for later use.

Modified WPC50 (16.7 grams) was mixed with 39.3 grams TMP1220 (Fonterra, NZ), 34.5 grams of dried sweet whey, and 5.1 grams of sodium chloride in 143.9 grams of warm water. Next, 52.9 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate was added and the slurry was then cooked in the RVA as in Example 1. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of this process cheese was 7117 Pa. The moisture content of the Sample J cheese was 49.2%, and the pH was 5.85.

**Comparative Sample K.** This comparative sample was made with the same high solubility MPI as Inventive Sample J, but with a commodity WPC34 as the whey protein source. WPC34 (28.7 grams; Leprino, Denver, CO) was mixed with 39.3 grams TMP1220 (Fonterra, NZ), 22.5 grams of dried sweet whey, and 5.2 grams of sodium chloride in 144.3 grams of warm water. Next, 52.6 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in an RVA. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of this process cheese was 5244 Pa. The moisture content of the Sample K cheese was 48.9% and the pH was 5.91.

**Comparative Sample L.** This is a comparative sample made from the same high solubility MPI as Inventive Sample J combined with a relatively low functionality modified WPC50 as the whey protein source.

The relatively low functionality thermally modified WPC50 was prepared by heating a WPC50 having 39.5 percent solids (i.e., about 19.5 percent protein on a wet basis) to 100°F, where the pH was adjusted from 6.3 to 7.6 using 5N NaOH. The WPC at pH 7.6 was then heated to 180°F by steam injection and held in a holding tube for 6 min. Afterwards, the WPC was pumped into a Breddo Likwifier to disperse any large whey protein curds, sheared in a Silverson high shear pump, and spray dried. Due to dilution from direct steam injection, the liquid modified WPC had a final solid content of 35.9 percent and a protein content of 17.76 percent. Since the protein content was adjusted to about 19.5 percent, rather than to below about 7.5 percent, the resulting modified whey protein was considered to be of relatively low functionality as compared to the modified liquid whey protein of Sample J. The modified WPC was then dried for later use.

Modified WPC50 (17.1 grams) was mixed with 39.3 grams TMP1220 (Fonterra, NZ), 34.0 grams of dried sweet whey, and 5.1 grams of sodium chloride in 142.8 grams of warm water. Next, 52.7 grams of melted anhydrous milk fat were added to the solution to form a slurry. The pH of the slurry was adjusted to about 5.1 through lactic acid (88% concentration) additions. After pH adjustment, 7.5 grams of disodium phosphate were added and the slurry was then cooked in the RVA as in Example 1. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH as described in Example 1. The yield stress of the Sample L process cheese was 5416 Pa. The moisture content of was 49.1%, and the pH was 5.83.

**Summary of Samples J-L.** Samples J-L again demonstrate the synergistic combination of high solubility casein (milk protein) and high functionality thermally modified whey protein. The protein sources and yield stress of each sample are summarized in Table 3 below. The synergistic combination of high functionality modified WPC and high solubility MPI resulted in a sharp increase in firmness for Inventive Sample J that could not be predicted based on use of high functionality thermally modified whey protein in process cheeses with other milk protein sources (as shown by comparison to samples B-G of Example 1, which were made from low solubility MPC).

Table 3

| Sample | K (Comparative) | L (Comparative) | J (Inventive) |
|---|---|---|---|
| **Milk Protein** | High Solubility MPI (TMP 1220) | High Solubility MPI (TMP 1220) | High Solubility MPI (TMP 1220) |
| **Whey Protein** | Commodity WPC | Low Function Modified WPC | High Function Modified WPC |
| **Yield Stress (Pa)** | 5244 | 5416 | 7117 |

The yield stress of the three samples is depicted graphically in Fig. 6, which shows a sharp increase in firmness (yield stress) for the synergistic combination relative to the other samples made from the same high solubility milk protein isolate.

## EXAMPLE 3

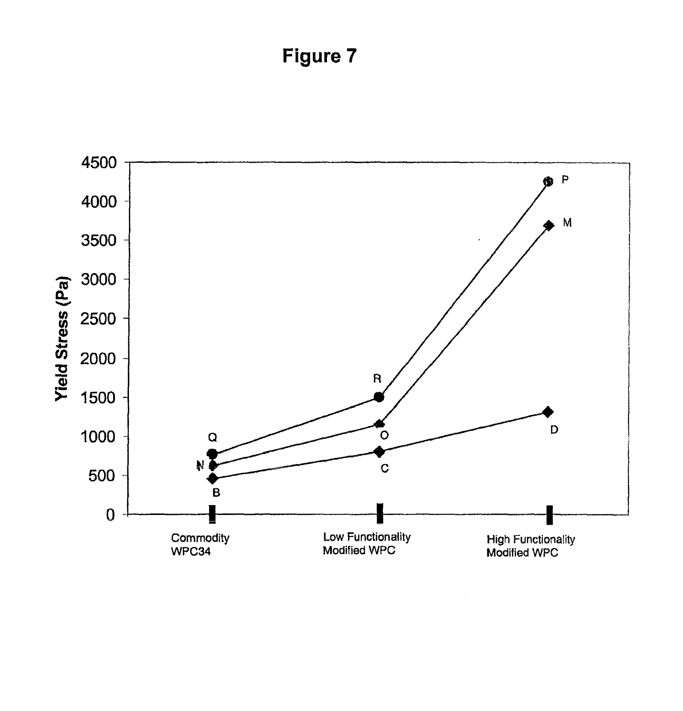

This example shows the yield stress of three samples of process cheese made from another milk protein compound, rennet casein from Fonterra (NZ). Despite the rennet casein's relatively low solubility, an unexpectedly sharp increase in firmness is observed in the Inventive sample due to the synergistic combination of rennet casein and high functionality modified whey protein concentrate, as shown in Fig. 7.

**Inventive Sample M.** This is an inventive sample exhibiting the unexpected synergy of using a rennet casein and a high functionality modified WPC50.

The high functionality modified whey protein concentrate was created by diluting WPC50 from 39.5 percent solids to 14.7 percent solids (i.e., about 7.4 percent protein). The diluted WPC solution was heated to 100°F and the pH was adjusted from 6.3 to 7.6 using 5N NaOH. The liquid WPC at pH 7.6 was then heated to 180°F by steam injection and held in a holding tube for 6 min. Afterwards, the solution was pumped into a Breddo Likwifier to disperse any large whey protein curds, sheared in a Silverson high shear pump, and spray dried. Due to dilution from direct steam injection, the liquid modified WPC had a final solid content of 13.0 percent and a protein content of 6.6 percent. The modified WPC was then dried for later use.

Modified WPC50 (32.7 grams) was mixed with 33.8 grams rennet casein (Fonterra, NZ), 26.5 grams of dried sweet whey, and 5.4 grams of sodium chloride in 141.5 grams of warm water. Next, 52.6 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added. The slurry was then cooked in an RVA. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of the Sample M process cheese was 3699 Pa, the moisture content was 49.4%, and the pH was 5.79.

**Comparative Sample N.** This is a comparative sample using a rennet casein as the casein source and a commodity WPC34 as the whey protein source. WPC34 (56.0 grams; Leprino, Denver, CO) was mixed with 33.8 grams rennet casein (Fonterra, NZ), 3.0 grams of dried sweet whey, and 5.5 grams of sodium chloride in 142.3 grams of warm water. Next, 51.9 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in an RVA. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of the Sample N process cheese was 622 Pa, the moisture content was 49.5%, and the pH was 5.86.

**Comparative Sample O.** This is a comparative sample using a rennet casein as the casein source and a relatively low functionality modified WPC50 as the whey protein source.

The relatively low functionality thermally modified WPC50 was prepared by heating a liquid WPC50 having 39.5 percent solids (i.e., about 19.5 percent protein) to 100°F where the pH was adjusted from 6.3 to 7.6 using 5N NaOH. The liquid WPC at pH 7.6 was then heated to 180°F by steam injection and held in a holding tube for 6 min. Afterwards, the WPC was pumped into a Breddo Likwifier to disperse any large whey protein curds, sheared in a Silverson high shear pump, and spray dried. Due to dilution from direct steam injection, the liquid modified WPC had a final solid content of 35.9 percent and a protein content of 17.76 percent. Since the protein content was adjusted prior to thermal treatment to about 19.5 percent on a wet basis, rather than to below about 7.5 percent, the resulting modified whey protein was of relatively low functionality as compared to the modified liquid whey protein of Sample J. The modified WPC was dried to form a powder.

Modified WPC50 powder (33.5 grams) was mixed with 33.8 grams rennet casein (Fonterra, NZ), 25.6 grams of dried sweet whey, and 5.4 grams of sodium chloride in 142.0 grams of warm water. Next, 52.2 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added. The slurry was then cooked in the RVA. After heating, about 25 grams of the hot cheese were poured into a plastic vial, cooled in a 41°F cooling bath, and then stored for 5 days at 41°F. After 5 days, the cheese was warmed to room temperature and measured for yield stress, moisture, and pH. The yield stress of this process cheese was 1147 Pa, the moisture content was 49.5%, and the pH was 5.83.

**Summary of Samples M, N, and O.** The samples M, N, and O demonstrate the synergistic combination of rennet casein and high functionality thermally modified whey protein. The protein sources and yield stress of each sample are summarized in Table 4 below. The combination results in a sharp increase in firmness for Inventive Sample M that could not be predicted based on use of high functionality thermally modified whey protein in process cheeses with other milk protein sources. In contrast, Comparative Samples N and O represent much smaller improvements over process cheese made with the same WPC but combined with low solubility MPC (Samples B and C, respectively, from Example 1 above).

Table 4

| Sample | N Comparative | O Comparative | M Comparative | B Comparative | C Comparative | D Comparative |
|---|---|---|---|---|---|---|
| **Milk Protein** | Rennet Casein (Fonterra, NZ) | Rennet Casein NZ) | Rennet Casein (Fonterra, NZ) | Commodity MPC | Commodity MPC | Commodity MPC |
| **Whey Protein** | Commodity WPC | Low Function Modified WPC | High Function Modified WPC | Commodity WPC | Low Function Modified | High Function Modified |
| **Yield Stress (Pa)** | 622 | 1147 | 3699 | 450 | 810 | 1314 |

The yield stress of the three samples is depicted graphically in Fig. 7, which shows a sharp increase in firmness (yield stress) for the synergistic combination relative to the other samples made from the same high solubility rennet casein. This is contrary to the trend shown in Comparative Samples B, C, and D, where the contribution of the same high functionality thermally modified WPC in Sample D was much less significant in comparison to Samples B and C. This again demonstrates the synergistic effect of high solubility milk protein and high functionality thermally modified whey protein.

### EXAMPLE 4

This example shows the yield stress of three samples of process cheese made from another rennet casein from another supplier (Kerry, Ireland). As in Examples 1 through 3, an unexpectedly sharp increase in firmness is observed in the Inventive sample due to the synergistic combination of rennet casein and high functionality modified whey protein concentrate, as shown in Fig. 7.

**Inventive Sample P.** This is an inventive sample exhibiting the unexpected synergy of using a rennet casein as the milk protein source and a high functionality modified WPC50 as the whey protein source. Modified WPC50 (32.6 grams; prepared as described above in Sample M of Example 3) was mixed with 33.3 grams rennet casein (Kerry, Ireland), 27.0 grams of dried sweet whey, and 5.4 grams of sodium chloride in 141.5 grams of warm water. Next, 52.8 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added. The slurry was then cooked in the RVA. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of the Sample P process cheese was 4252 Pa, the moisture content was 49.4%, and the pH was 5.75.

**Comparative Sample Q.** This is a comparative sample using a rennet casein as milk protein source and a commodity WPC34 as the whey protein source. WPC34 (56.8 grams; Leprino, Denver, CO) was mixed with 33.3 grams rennet casein (Kerry, Ireland), 3.6 grams of dried sweet whey, and 5.4 grams of sodium chloride in 142.3 grams of warm water. Next, 52.1 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in the RVA. After heating, about 25 grams of the hot cheese was poured into a plastic vial, cooled in a 41°F cooling bath, and then stored for 5 days at 41°F.

After 5 days, the cheese was warmed to room temperature and measured for yield stress, moisture, and pH as described in Example 1. The yield stress of the Sample Q process cheese was 767 Pa, the moisture content was 49.0%, and the pH was 5.79.

**Comparative Sample R.** This is a comparative sample using a rennet casein as the milk protein source and a relatively low functionality modified WPC50 as the whey protein source. Modified WPC50 (33.4 grams; made as described above in Sample O of Example 4) were mixed with 33.3 grams rennet casein (Kerry, Ireland), 26.1 grams of dried sweet whey, and 5.4 grams of sodium chloride in 142.0 grams of warm water. Next, 52.2 grams of melted anhydrous milk fat were added to the solution to form a slurry. The pH of the slurry was adjusted to about 5.1 to about 5.15 through lactic acid (88% concentration) additions. After pH adjustment, 7.5 grams of disodium phosphate were added and the slurry was then cooked in a RVA. After heating, about 25 grams of the hot cheese were poured into a plastic vial, cooled in a 41°F cooling bath, and then stored for 5 days at 41°F.

After 5 days, the cheese was warmed to room temperature and measured for yield stress, moisture, and pH. The yield stress of this process cheese was 1501 Pa, the moisture content was 49.4%, and the pH was 5.81.

**Summary of Samples P-R.** Samples P, Q, and R again demonstrate the synergistic combination of rennet casein (milk protein) and high functionality therma!!y modified whey protein. The protein sources and yield stress of each sample are summarized in Table 5 below. The combination results in a sharp increase in firmness for Inventive Sample P that could not be predicted based on use of high functionality thermally modified whey protein in process cheeses with other milk protein sources (as shown by comparison to samples B-G, which were made from the same whey protein sources but combined with commodity MPC).

Table 5

| Sample | Q (Comparative) | R (Comparative) | P (Inventive) |
|---|---|---|---|
| **Milk Protein** | Rennet Casein (Kerry, Ireland) | Rennet Casein (Kerry, Ireland) | Rennet Casein (Kerry, Ireland) |
| **Whey Protein** | Commodity WPC | Low Function Modified WPC | High Function Modified WPC |
| **Yield Stress (Pa)** | 767 | 1501 | 4252 |

The yield stress of the three samples is depicted graphically in Fig. 7, which shows a sharp increase in firmness (yield stress) for the synergistic combination relative to the other samples made from the same rennet casein.

**EXAMPLE 5**

In order to analyze differences in functionality between the "high functionality" and "low functionality" modified WPCs used herein, samples of several modified WPCs were analyzed prior to incorporation into process cheese. Several comparisons between the structure and viscosity of high functionality modified WPCs and low functionality modified WPCs are presented below. As described further herein, micorgraphs and viscosity measurements indicate that the high functionality modified WPCs, formed by heating a mixture having less than about 7.5 percent protein on a wet basis, are formed of less dense aggregates than their low functionality counterparts. Without being bound to a particular theory, it appears that the low functionality modified WPCs form dense aggregates, resulting in a less viscous mixture. On the other hand, the less dense aggregates of the high functionality modified WPC appear to form highly dispersed protein strands that are afforded more interaction with water molecules, forming a viscous protein-water solution comprising a cohesive network of protein strands.

**Comparison of Modified WPCs used in Examples 1-4.** Samples of the high functionality modified WPC and low functionality modified WPC from Examples 1-4 above were analyzed without incorporation into processed cheese to determine their relative viscosity and visual characteristics

The high functionality modified whey protein concentrate was created with WPC50 with about 14.7 percent solids (i.e., about 7.4 percent protein on a wet basis). As described above, the WPC solution was heated to 100°F, the pH was adjusted from 6.3 to 7.6, and then heated to 180°F and held for 6 min. FIG. 8 shows a micrograph of the liquid high functionality modified WPC 50, wherein protein strands are relatively evenly dispersed, forming a relatively homogenous protein suspension.

The relatively low functionality modified whey protein was produced using the same conditions described above, but starting with a WPC50 slurry having 9.5 percent solids (i.e., about 19.5 percent protein on a wet basis). FIG. 9 shows a micrograph of this relatively low functionality modified WPC 50, which is highly aggregated compared to the high functionality protein and tends to form discrete, dense particles (the dark areas in the micrograph).

Due to the density of the aggregates, the low functionality proteins are not as well dispersed throughout the solution. The high functionality modified WPC appears to have formed a more homogenous gel-like solution of protein in water. When tested for viscosity in the RVA used in Examples 1-4, it was shown that the more homogenous high functionality solution had a viscosity of 3192 cp. This was more than 8 times higher than the viscosity of the more heterogeneous low functionality solution, which had a viscosity of only 397 cp.

FIGS. 10 and 11 show the high functionality (FIG. 10) and low functionality (FIG. 11) modified whey proteins from FIGS. 8-9 in a powder form dispersed in a small amount of water. Since the powder was not thoroughly mixed with the water, there is more noticeable separation of protein and water than in the liquid samples. The high functionality protein is again shown to be more loosely aggregated, while the lower functionality protein is more densely aggregated.

**Comparison of Modified WPC 34 formed at pH 6.8.** A low functionality modified WPC 34 was formed from a liquid WPC having about 34 percent whey protein to about 47.7 percent solids that was diluted to about 39.3 percent solids (i.e., about 13.2 percent protein). The WPC was modified by a process in which the diluted WPC was heated to about 100°F and then the pH was adjusted from 6.3 to about 6.8 using additions of 5N NaOH. The liquid WPC at pH of about 6.8 was then heated to about 180°F by steam injection and then held in a holding tube for 3 minutes. The solution was then pumped into a Breddo Likwifier to disperse any large whey protein curds, sheared in a high shear pump, cooled to less than about 80°F, and then spray dried. The liquid modified WPC had a final solid content of 38.8 percent and a protein content of 13.1 percent. A high functionality modified WPC 34 was formed using the same modification procedure applied to a liquid WPC 34 that was concentrated to about 47.7 percent solids and then diluted to about 25.0 percent solids (i.e., about 7.5 percent protein). The high functionality modified liquid WPC had a final solid content of 23.6 percent and a protein content of 7.1 percent.

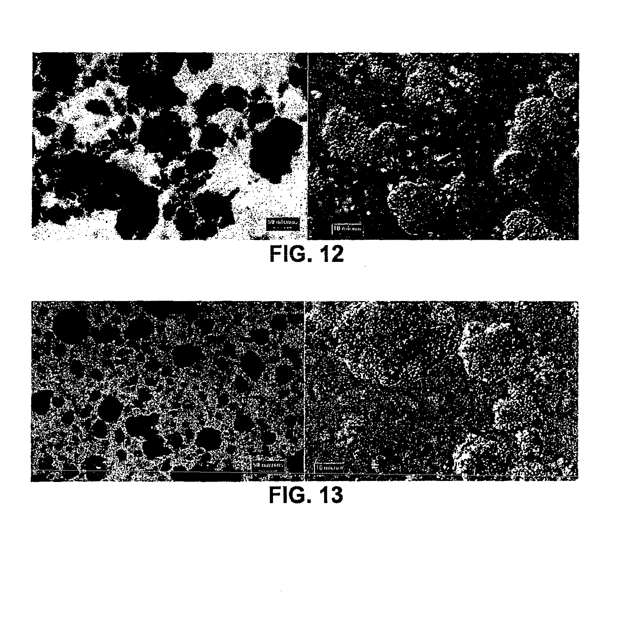

The two modified WPC 34 powders that were each dispersed in water to form slurries having about 30% solids (about 10% protein). The apparent viscosity of each slurry was measured in the RVA. Measurement of viscosity took place at 86°F and 150 r.p.m. The low functionality modified WPC 34 had a viscosity of 60 cp, while the high functionality modified WPC 34 had a viscosity of 218 cp. The micrographs in FIGS. 12 and 13 confirm that the high functionality WPC (FIG. 13) had a less dense structure that the low functionality WPC (FIG. 12).

**Comparison of Modified WPC 34 formed at pH 7.6.** A low functionality modified WPC 34 was created from a liquid WPC 34 that had been first concentrated to 47.7 percent solids and then diluted to 38.4 percent solids (i.e., about 12.4 percent protein). The WPC was modified by the following procedure. The diluted solution was heated to 100°F and the pH adjusted from 6.3 to 7.6 using 5N NaOH. The liquid WPC at pH 7.6 was then heated to 180°F by steam injection and held in a holding tube for 3 min. After heating, the solution was pumped into a Breddo Likwifier to disperse any large whey protein curds, sheared in a Silverson high shear pump, cooled to less than 80°F in a Votator, and then spray dried, The liquid modified WPC had a final solid content of 38.4 percent and a protein content of 12.4 percent.

A first high functionality modified WPC 34 was formed using the same modification procedure described above. The liquid modified WPC had a final solid content of 20.3 percent and a protein content of 6.9 percent. A second high functionality modified WPC 34 was created using the following procedure. A liquid WPC at 34 percent protein was first concentrated to 43.7 percent solids and then diluted to 14.2 percent solids (about 4.9 percent protein). The diluted solution was heated to 88°F and the pH was adjusted from 6.3 to 7.6 using 5N NaOH. The liquid WPC at pH 7.6 was then heated to 190°F by steam injection and held in a holding tube for 3 min and then pumped into a Breddo Likwifier and held for 30 minutes with continuous mixing to disperse any large whey protein curds. Afterwards, the solution was sheared in a Silverson high shear pump, cooled to less than 100°F in a Votator, homogenized at 5000/500 PSI, and then spray dried. Due to dilution from direct steam injection, the liquid modified WPC had a final solid content of 13.0% and a protein content of 4.5%.

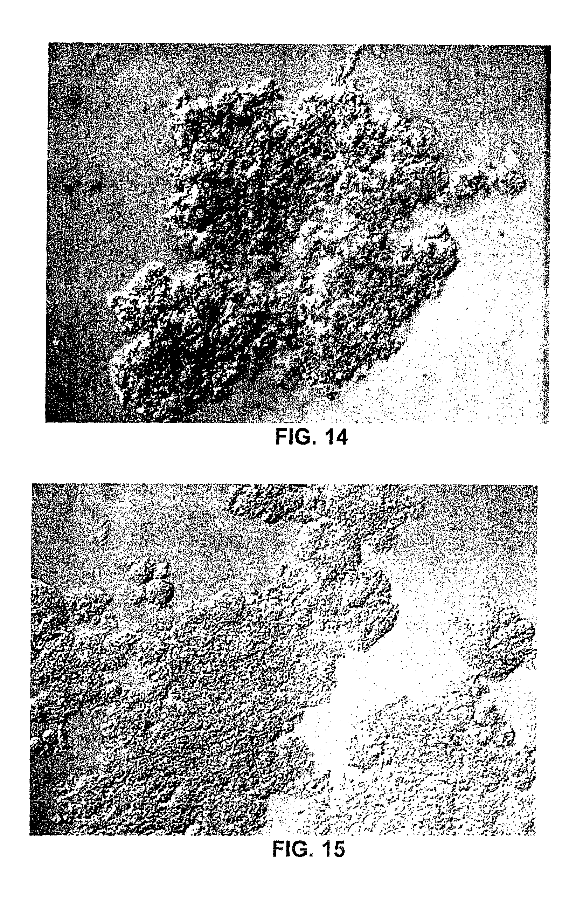

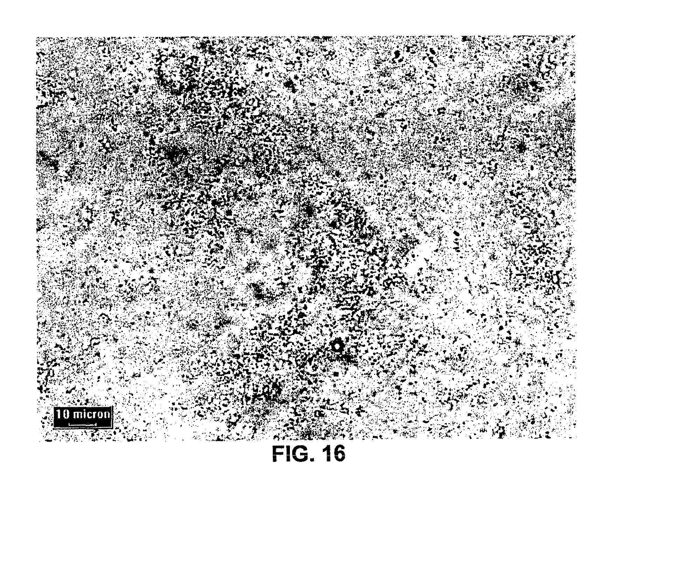

The three modified WPC 34 powders were each dispersed in water to form slurries having about 30% solids (about 10% protein). FIGS.14,15,and 16 are micrographs showing the relative densities of aggregates in the low functionality, first high functionality, and second high functionality modified WPCs, respectively. The apparent viscosity of each slurry was measured in the RVA at 86°F and 150 r.p.m. The low functionality WPC 34 (FIG. 14) had a viscosity of 82 cp, while the first high functionality WPC 34 (FIG. 15) had a viscosity of 159 cp and the second high functionality WPC 34 (FIG. 16) had a viscosity of 538 cp. The micrographs show that the two high functionality WPCs had a less dense structure than their low functionality counterpart.

**Comparison of Modified WPC 50 formed at pH 7.6.** High and low functionality modified WPCs were created for comparison. The low functionality WPC was created from a liquid WPC with 50 percent protein that was diluted to 39.5 percent solids (i.e., about 19.5 percent protein). The high functionality WPC was created from a liquid WPC 50 that was diluted to 14.7 percent solids (i.e., about 7.4 percent protein).

The following modification steps were applied to both WPCs. The liquid WPC at pH 7.6 was heated to 100°F where the pH was adjusted from 6.3 to 7.6 using 5N NaOH, and then heated to 180°F by steam injection and held in a holding tube for 6 min. Afterwards, the WPC pumped into a Breddo Likwifier to disperse any large whey protein curds, sheared in a Silverson high shear pump, and spray dried.

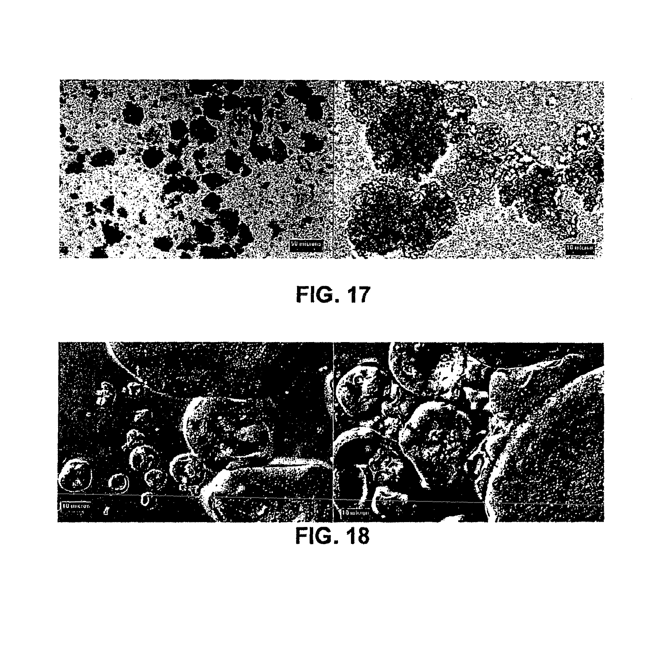

The two modified WPC 50 powders were each dispersed in water to form slurries having about 30% solids (about 15% protein). The apparent viscosity of each slurry was measured in the RVA at 86°F and 150 r.p.m. The low functionality WPC 50 had a viscosity of 397 cp, while the high functionality WPC 50 had a viscosity of 3192 cp. The micrographs in FIGS. 17-18 show that the high functionality WPC (FIG. 18) had a less dense structure than the low functionality counterpart (FIG. 17).

While the invention herein has been particularly described with specific reference to particular embodiments, it will be appreciated that various alterations, modifications, and adaptations may be made based on the present disclosure, and are intended to be within the spirit and scope of the present invention as defined by the following claims.

## Claims

1.    A method of forming a processed cheese, the method comprising:

thermally treating a whey composition having a whey protein concentration from about 4 to about 7.5 percent and a pH from about 6 to about 7.6 to form a modified whey with modified whey protein;
blending the modified whey protein with a milk protein having solubility of at least 60% to form a slurry;
heating the slurry for a time and temperature sufficient to form the processed cheese;
wherein the processed cheese comprises between about 12 to about 20 percent total casein and whey protein; about 45 to about 60 percent moisture; and a ratio of casein protein to whey protein at least about 60:40; and
wherein the processed cheese further comprises about 3 to about 7 percent modified whey protein and has a firmness greater than about 3,000 Pa with a generally smooth texture.

2.    The method of claim 1, wherein the milk protein is Nutrilac CH7813, TMP1220, TMP 1100, or TMP 1350.

3.    A method of forming a processed cheese, the method comprising:

thermally treating whey composition having a whey protein concentration from about 4 to about 7.5 percent and a pH from about 6 to about 7.6 to form a modified whey with modified whey protein;
blending the modified whey protein with a rennet casein to form a slurry;
heating the slurry for a time and temperature sufficient to form the processed cheese;

wherein the processed cheese comprises between about 12 to about 20 percent total casein and whey protein; about 45 to about 60 percent moisture; and a ratio of casein protein to whey protein at least about 60:40; and wherein the processed cheese further comprises about 3 to about 7 percent modified whey protein and has a firmness greater than about 3,000 Pa with a generally smooth texture.

4. The method of claim 1 or 3, wherein the thermal treatment step is carried out at about 180°F or higher for at least about 3 minutes.

5. The method of claim 1 or 3, wherein the thermal treatment step is carried out at a pH between about 6.8 and about 7.6.

6. The method of claim 1 or 3, wherein the processed cheese further comprises about 5.7 to about 6.3 percent whey protein and about 8.5 to about 9.5 percent casein protein.

7. The method of claim 1 or 3, wherein the processed cheese has a yield stress between about 3,000 Pa and about 8,000 Pa.

8. A processed cheese comprising:

about 12 to about 20 percent total casein and whey protein, where the whey protein comprises about 55% to about 97% unmodified whey protein and about 3 to about 45% thermally treated whey protein;
at least about 4.8 % whey protein;
about 45 to about 50 percent moisture; and
about 5 to about 15 percent casein from rennet casein or from high solubility milk protein having a solubility of at least 60%;
wherein the thermally treated whey is prepared by heating a solution comprising about 4 to about 7.5 percent protein at a pH from about 6 to about 7.6 at least 180°F for at least 3 minutes; and
wherein the processed cheese has a yield stress greater than about 3,000 Pa and a generally smooth texture.

9. The processed cheese of claim 8, wherein the thermal treatment step is carried out at about 180°F or higher for at least about 3 minutes.

10. The processed cheese of claim 8, wherein the thermal treatment step is carried out at a pH between about 6.8 and 7.6.

11. The processed cheese of claim 8, wherein the high solubility milk protein is Nutrilac CH7813, TMP1220, TMP 1100, or TMP 1350.

12. The processed cheese of claim 8, further comprising about 5.7 to about 6.3 percent total whey protein and about 8.5 to about 9.5 percent total casein protein.

13. A method of producing processed cheese comprising:

providing a whey protein concentrate having between about 34 percent and about 50 percent whey protein in the dry matter;
diluting an aqueous solution of the whey protein concentrate to about 4 to about 7.5 percent whey protein to form a dilute whey protein solution;
adjusting the pH of the dilute whey protein concentrate solution to about 6 to about 7.6; and
thermally treating the pH adjusted dilute whey protein concentrate solution in a constant state of agitation for at least 3 minutes at 180°F to form a modified whey having whey protein aggregates;
blending the modified whey with a high solubility milk protein having a solubility of at least 60% or a rennet casein to form a slurry; and
heating the slurry for a time and temperature sufficient to form the processed cheese.

14. The method of claim 13, wherein the constant state of agitation is subjecting a shear force to the pH adjusted dilute whey protein solution.

15. The method of claim 13, wherein the pH is adjusted to about 6.8 to about 7.6.

**Figure 1**

**Figure 2**

Figure 3

# FIG. 4

# Figure 5

# Figure 6

# Figure 7

FIG. 8

FIG. 9

**FIG. 10**

**FIG. 11**

**FIG. 12**

**FIG. 13**

FIG. 14

FIG. 15

FIG. 16

**FIG. 17**

**FIG. 18**

Europäisches
Patentamt

European
Patent Office

Office européen
des brevets

## EUROPEAN SEARCH REPORT

Application Number

EP 08 16 8418

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 854 362 A (KRAFT FOODS HOLDINGS INC [US]) 14 November 2007 (2007-11-14) * example 2; table 1 * ----- | 1-15 | INV. A23C19/08 A23C20/00 |
| D,X | US 2007/134396 A1 (MA YINQING [US] ET AL) 14 June 2007 (2007-06-14) * example 2; table 1 * ----- | 1-15 | |
| X | WO 2007/108708 A (WILES PETER [NZ]; LEE SIEW KIM [NZ]; ANEMA SKELTE GERALD [NZ]; HAVEA P) 27 September 2007 (2007-09-27) * example 1 * ----- | 1-15 | |
| A | US 2003/165594 A1 (YEE JENG-JUNG [US] ET AL) 4 September 2003 (2003-09-04) * examples * ----- | 1-15 | |
| A | US 2002/192348 A1 (LAYE ISABELLE [US] ET AL LAYE ISABELLE [US] ET AL) 19 December 2002 (2002-12-19) * claims * ----- | 1-15 | TECHNICAL FIELDS SEARCHED (IPC) |
| P,A | WO 2008/130253 A (YE AIQIAN [NZ]; TAYLOR STEPHEN MURRAY [NZ]) 30 October 2008 (2008-10-30) * example 11 * ----- | 1-15 | A23C |

The present search report has been drawn up for all claims

| Place of search | Date of completion of the search | Examiner |
|---|---|---|
| The Hague | 25 March 2009 | Koch, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 16 8418

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2009

| Patent document cited in search report | | Publication date | Patent family member(s) | | Publication date |
|---|---|---|---|---|---|
| EP 1854362 | A | 14-11-2007 | AR | 060896 A1 | 23-07-2008 |
| | | | AU | 2007201948 A1 | 29-11-2007 |
| | | | BR | PI0701649 A | 15-01-2008 |
| | | | CA | 2588333 A1 | 12-11-2007 |
| | | | CN | 101301010 A | 12-11-2008 |
| | | | JP | 2007300925 A | 22-11-2007 |
| | | | NO | 20072422 B | 13-11-2007 |
| | | | NZ | 555086 A | 24-12-2008 |
| US 2007134396 | A1 | 14-06-2007 | NONE | | |
| WO 2007108708 | A | 27-09-2007 | AR | 060076 A1 | 21-05-2008 |
| US 2003165594 | A1 | 04-09-2003 | US | 2007281053 A1 | 06-12-2007 |
| US 2002192348 | A1 | 19-12-2002 | CA | 2390823 A1 | 15-12-2002 |
| | | | US | 2004126473 A1 | 01-07-2004 |
| WO 2008130253 | A | 30-10-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5750177 A, Yee
- US 4518616 A, Czulak
- GB 2063273 A
- US 6139900 A
- US 4734287 A
- US 5494696 A
- US 6669978 B
- US 20070134396 A

**Non-patent literature cited in the description**

- **Morr et al.** *J. Food Sci.,* 1985, vol. 50, 1715-18
- **Breidinger, S.L. ; Steffe, J.F.** *J. Food Sci.,* 2001, vol. 66, 453 456
- **Kapoor, R. ; Metzger, L.E.** *J. Dairy Sci.,* 2005, vol. 88, 3382-3391